# EUROPÄISCHE PATENTSCHRIFT

(11) **EP 1 517 034 B1**
(45) Veröffentlichungstag und Bekanntmachung des Hinweises auf die Patenterteilung: **18.04.2012**
(21) Anmeldenummer: 04021087.4
(22) Anmeldetag: 04.09.2004
(51) Int. Cl.: F03D 1/06

(54) **Rotorvorrichtung einer Windenergieanlage mit einer Melde- und Auswerteeinheit zur Brand-, Rauch- und Funktionsüberwachung der Rotorblätter und Windenergieanlage**
Rotor of a wind turbine plant comprising a device for monitoring fire, smoke and the functionality of its rotor blades and wind energy plant
Rotor d'une éolienne comprenant un dispositif pour la surveillance d'incendies, de fumées et du fonctionnement des pales et éolienne

(30) Priorität: 22.09.2003 DE 10344188
(43) Veröffentlichungstag der Anmeldung: 23.03.2005
(73) Patentinhaber: Minimax GmbH & Co KG, 23840 Bad Oldesloe (DE)
(72) Erfinder: Russwurm, Manfred, 23611 Bad Schwartau (DE); Lindau, Thilo, Dipl.-Ing., 23879 Mölln (DE); Westphal, Thorsten, Dipl.-Ing., 23554 Lübeck (DE); Ziems, Bernd, Dipl.-Ing., 23619 Zarpen (DE); Dittmer, Hauke, Dipl.-Ing., 23769 Johannisberg/Fehrmann (DE)
(74) Vertreter: Lüdtke, Frank

(56) Entgegenhaltungen:
- DE-A1- 10 065 314
- DE-A1- 10 124 280
- DE-A1- 10 205 373
- DE-C1- 4 206 656
- DE-C1- 10 005 190
- DE-C1- 19 605 637

## Beschreibung

Die Erfindung betrifft eine Rotorvorrichtung mit einer Melde- und Auswerteeinheit zur Brand-, Rauch- und Funktionsüberwachung von Rotorblättern in Windenergieanlagen, die die Rotorblätter einer Windenergieanlage auf Rauch oder Feuer durch Luftprobenentnahme überwacht, um Brandschäden in der Entstehungsphase zu detektieren. Zum Gegenstand der Erfindung gehört auch eine Windenergieanlage, die mit einer derartigen Rotorvorrichtung ausgestattet ist.

Windenergieanlagen wandeln die kinetische Energie des Windes in andere Energieformen um. Über Generatoren erfolgt dies vorwiegend in elektrischen Strom. Windenergieanlagen bestehen im wesentlichen aus einem senkrecht aufgestellten Turm, auf dem eine sogenannte Gondel drehbar gelagert ist. In der Gondel sind die elektrischen und mechanischen Einrichtungen zur Stromerzeugung angeordnet. An der Gondel wird der Antrieb (Rotor) der Windenergieanlage angebracht. Der Rotor besteht unter anderem aus einem oder mehreren möglichst strömungsgünstig ausgebildeten Rotorblättern, die sich um die Rotorlängsachse drehen.
Gemäß den gesetzlichen Vorschriften werden derartige Windenergieanlagen bereits seit 1999 mit Feuerlöschgeräten in der Gondel oder im Turm ausgerüstet.

DE 102 05 373 A1 beschreibt eine Windenergieanlage mit einem Turm und einer an der Spitze des Turmes angeordneten Gondel und ein Verfahren zur Steuerung der Windenergieanlage. Um eine Brandentstehung zu verhindern oder wenigstens einen entstehenden Brand schnell löschen zu können, ist eine Vorrichtung zum Erzeugen einer inerten Atmosphäre im Turm, der Gondel, einem Nebengebäude der Windenergieanlage oder einem anderen Raum der Windenergieanlage, beispielsweise im Inneren eines Rotorblattes, vorgesehen.

DE 101 24 280 A1 beschreibt eine selbstansaugende Brandmeldeeinrichtung und ein Verfahren zu deren Betrieb mit einer Ansaugeinrichtung zur regelbaren Ansaugung von Umgebungsluft aus einem Überwachungsbereich, welche ein hochempfindliches optisches Streulichtmeßsystem mit einer hochenergetischen Lichtquelle und einem oder mehreren Empfangselementen zur Detektion von in einem oder mehreren Streuwinkeln an den im Meßbereich befindlichen Rauchpartikeln gestreuten optischen Strahlung aufweist. In der Brandmeldeeinrichtung sind zusätzlich ein oder mehrere Gassensoren und/oder ein Gassensorarray angeordnet, welche mindestens eine Brandart detektieren und signaltechnisch ebenfalls mit dem zentralen oder dezentralen Microcontroller-System und/oder der Brandmeldezentrale zur Signalauswertung verbunden sind.

Aus der DE 100 05 190 C1 ist eine Windenergieanlage mit einer Feuerlöscheinrichtung zum Abgeben eines Löschmittels in der Gondel bekannt, durch welches ein ausgebrochenes Feuer gelöscht werden soll. Dazu sind entsprechende Vorrichtungen in der Gondel der Windenergieanlage vorgesehen. Zum Löschen eines Brandes in der Gondel und im Turm sind erhebliche Löschmittelmengen erforderlich. Weiterhin ist es als nachteilig anzusehen, daß mit dem Ausbrechen des Brandes bereits meist erhebliche Schäden entstehen und für die Rotorblätter keine gesonderten Schutzmaßnahmen vorgesehen sind. Die Rotorblätter bestehen meist aus Kunststoff und sind deshalb bei hoher Temperaturentwicklung in unmittelbarer Nähe der Anlagen z. B. durch Blitzschlag oder Waldbrand leicht entflammbar.

Aufgabe der vorliegenden Erfindung ist es daher eine Vorrichtung anzugeben, welche eine Brandgefahr erkennt, das Entstehen eines Brandes verhindert und einen möglichen Schaden begrenzt. Des Weiteren soll eine Windenergieanlage angegeben werden, die über eine derartige Vorrichtung der Branderkennung verfügt.

Erfindungsgemäß wird diese Aufgabe durch die Merkmale der Ansprüche 1 und 12 gelöst. Besonders zweckmäßige Ausbildungen der Erfindung sind in den zugehörigen Ansprüchen 2 bis 11 enthalten.

Demnach umfasst die Erfindung eine Rotorvorrichtung einer Windenergieanlage umfassend eine Melde- und Auswerteeinheit zur Brand-, Rauch- und Funktionsüberwachung der Rotorblätter der Windenergieanlage, dadurch gekennzeichnet, dass die Rotorvorrichtung mindestens ein Rotorblatt umfasst, das mit mindestens einem Ansaugrohr versehen ist, welches die angesaugte Luft zu der in der Rotorvorrichtung angeordneten Melde- und Auswerteeinheit leitet. Zur Luftprobenentnahme sind nach einem bevorzugten Merkmal die Ansaugrohre mit Öffnungen versehen, um je nach Länge der Rotorblätter, auf der ganzen Länge gleichmäßig Luftproben zu entnehmen.

Vorteilhaft ist bei mehreren Rotorblättern die jeweils mit derartigen Ansaugrohren versehen sind, zwischen den Ansaugrohren der einzelnen Rotorblätter und der Meldeeinheit ein Umschaltventil zur selektiven Entnahme von Luftproben angeordnet. Dadurch ist sichergestellt, daß die Meldeeinheit (Brandsensoren) nur mit der Luftprobe eines Rotorblattes beaufschlagt wird. Die Selektionszeiten der einzelnen Rotorblätter ist den Erfordernissen der Anlage anzupassen. Damit beim Umschalten der Luftprobe von einem Rotorblatt zum anderen keine Totzeiten entstehen, können ständig die Luftproben aus allen Rotorblättern entnommen werden.

Bevorzugt ist die Meldeeinheit im rotierenden Teil der Rotornabe angeordnet. Eine Anordnung im feststehenden Teil der Vorrichtung ist aber auch möglich. Weiterhin ist es denkbar, die Luftproben über die Nabenhohlwelle der Meldeeinheit zuzuführen.
Vorteilhaft ist die Meldeeinheit als eine Sensoreinheit ausgebildet, mit welcher die angesaugten Luftproben auf alle thermischen Zersetzungsprodukte der angesaugten Luft, mindestens jedoch auf eine der Brandkenngrößen Rauch, CO-Brandgase, brennbare Gase und Wärme analysierbar sind.
Die genannte Meldeeinheit ist bevorzugt über die rotierende Nabenwelle mittels Schleifringen oder eines Generators, der sich auf der Nabenwelle befindet, mit Strom versorgbar, wobei nach einem weiteren Merkmal der Erfindung die Schaltzustände der Sensoren der Meldeeinheit mittels eines modulierten Codes über die Schleifringe oder per Funk an eine Auswerteeinheit übertragbar sind.
Für den Fall, daß die Stromzufuhr über einen Generator erfolgt, ist bei Stillstand eine Batterie einzusetzen.
Bevorzugt sind die Ansaugrohre innerhalb und/oder außerhalb der Rotorblätter angeordnet, wobei sie sich über einen Großteil der Rotorblattfläche erstrecken. Zur Luftprobenentnahme sind die Ansaugrohre vorteilhaft mit mindestens einer Ansaugöffnung versehen, um je nach Länge der Rotorblätter, auf der ganzen Länge gleichmäßig Luftproben zu entnehmen.
Die Ansaugrohre können auch als in die Rotorblätter eingearbeitete Kanäle ausgebildet sein.

Nach einem weiteren Merkmal weisen die Ansaugrohre wahlweise eine Ansaugrohrrückführung auf. Dadurch können Luftdruckunterschiede innerhalb der Rotorblätter kompensiert werden.
Die Erfindung beinhaltet auch eine Windkraftanlage bestehend aus einem Turm und einer an der Spitze des Turmes angeordneten Gondel mit mechanischen und elektrischen Einrichtungen zur Stromerzeugung und einem Rotor mit mindestens einem Rotorblatt, das sich um die Rotor-Längsachse dreht, welche mit einer Vorrichtung der vorgenannten Art versehen ist. Zur Vermeidung von Wiederholungen wird auf die vorstehend beschriebenen Merkmale der Vorrichtung verwiesen.

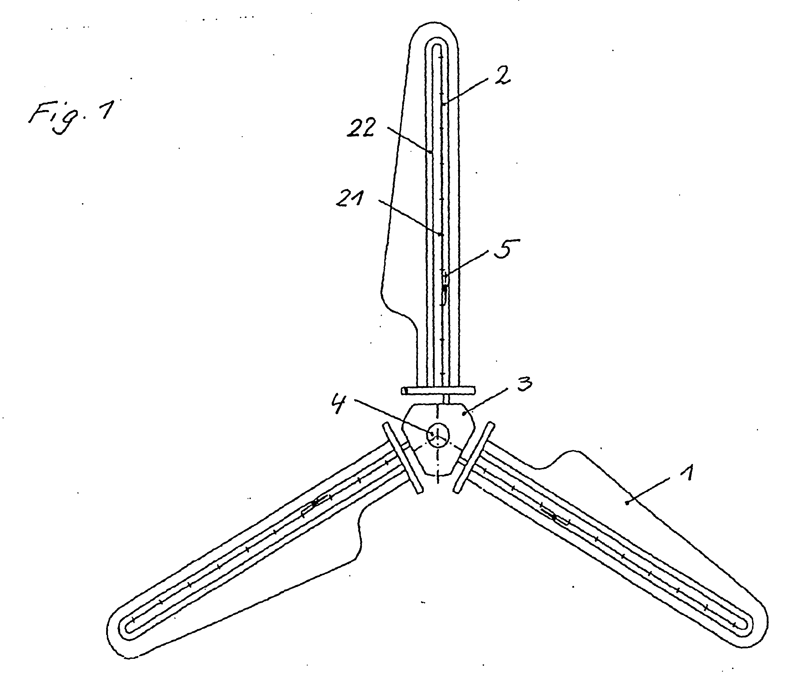

Die Erfindung ist nachfolgend anhand von Ausführungsbeispielen mit Bezug auf die Zeichnung näher erläutert. In der Zeichnung zeigt
- Figur 1:: eine schematische Ansicht des Rotors einer Windenergieanlage.

In der Figur 1 wird der Rotor einer Windenergieanlage gezeigt. Dieser besteht hier unter anderem aus drei möglichst strömungsgünstig ausgebildeten Rotorblättern 1, die sich mit der Rotornabe 4 um die Rotorlängsachse drehen.
Die Meldeeinheit 3 ist im rotierenden Teil der Rotornabe 4 angeordnet. Von der Meldeeinheit 3 wird je ein Ansaugrohr 2 innerhalb und/oder außerhalb der Rotorblätter 1 bis an deren Enden montiert. Zur Luftprobenentnahme sind die Ansaugrohre 2 mit mindestens einer Ansaugöffnungen 21 versehen, um je nach Länge der Rotorblätter 1, auf der ganzen Länge gleichmäßig Luftproben zu entnehmen. Durch eine Ansaugrohrrückführung 22 werden Luftdruckunterschiede innerhalb der Rotorblätter 1 kompensiert.
Die Luftproben 5 werden aus dem zu überwachenden Rotorblattbereich angesaugt und zur Meldeeinheit 3 geleitet. Durch den Einsatz von Multisensoren ist sichergestellt, daß auch Brände in der Entstehungsphase detektiert werden, z.B. CO- Brandgase. Die Auswertung der Luftproben auf Rauch, Brandgas, Temperaturerhöhung und Luftstromüberwachung erfolgt über die Meldeeinheit 3 und ist aus herkömmlichen Systemen von bekannten Brandmeldern bekannt. Die Sensoren der Meldeeinheit 3 arbeiten mit höchster Empfindlichkeit. Dabei werden zuverlässig und täuschungssicher geringste Konzentrationen thermischer Zersetzungsprodukte in der angesaugten Luft 5 detektiert. Wird ein festgelegter Schwellwert überschritten, setzt das System einen entsprechenden Alarm an eine Brandmeldezentrale (nicht dargestellt) ab, um gefährdete Anlagen oder Geräte auszuschalten oder bestimmte Löschanlagen automatisch zu aktivieren. So können bei einem derartigen Signal in Bezug auf die Erkennung eines Brandes an einem Rotorblatt diese in die senkrechte Position nach oben arretiert werden, so daß der Brand am Rotorblatt von selbst verlöscht und ein Übergreifen des Brandes auf diese Rotorblätter verhindert werden kann.

Mit einem Volumenstromsensor kann weiter der Luftstrom gemessen werden und mit eingestellten Sollwerten verglichen werden. Abweichungen (Bruch oder Verstopfung) können dadurch sicher erkannt werden und führen zu einer Störungsmeldung.
Damit die Luftproben selektiv bezogen auf die einzelnen Rotorblätter, entnommen werden können, ist vor der Meldeeinheit 3 ein Umschaltventil (nicht dargestellt) gesetzt. Dadurch ist sichergestellt, daß die Sensoren der Meldeeinheit 3 nur mit der Luftprobe 5 eines Rotorblattes 1 beaufschlagt werden. Die Selektionszeiten der einzelnen Rotorblätter sind den Erfordernissen der Anlage angepasst. Damit beim Umschalten der Luftprobe von einem Rotorblatt zum Anderen keine Totzeiten entstehen, werden ständig die Luftproben aus allen Rotorblättern entnommen.

Die Stromversorgung für die Meldeeinheit 3 erfolgt über die rotierende Nabenwelle mittels Schleifringen (nicht dargestellt). Die Schaltzustände der Meldeeinheit 3 können mittels eines modulierten Codes über die Schleifringe oder per Funk an ein herkömmliches Auswertsystem übertragen werden.

## Patentansprüche

1. Rotorvorrichtung einer Windenergieanlage, umfassend eine Melde- und Auswerteeinheit (3) zur Brand-, Rauch- und Funktionsüberwachung der Rotorblätter (1) der Windenergieanlage, **dadurch gekennzeichnet, daß** die Rotorvorrichtung mindestens ein Rotorblatt (1) umfasst, das mit mindestens einem Ansaugrohr (2) versehen ist, welches die angesaugte Luft zu der in der Rotorvorrichtung angeordneten Melde- und Auswerteeinheit (3) leitet.

2. Rotorvorrichtung nach Anspruch 1, **dadurch gekennzeichnet, daß** mehrere Rotorblätter (1) mit Ansaugrohren (2) versehen sind, wobei zwischen den Ansaugrohren (2) der einzelnen Rotorblätter (1) und der Meldeeinheit (3) ein Umschaltventil zur selektiven Entnahme von Luftproben (5) angeordnet ist.

3. Rotorvorrichtung nach den Ansprüchen 1 und 2, **dadurch gekennzeichnet, daß** die Meldeeinheit (3) im rotierenden Teil einer in der Rotorvorrichtung vorhandenen Rotornabe (4) angeordnet ist.

4. Rotorvorrichtung nach einem der o.g. Ansprüche, **dadurch gekennzeichnet, daß** die Meldeeinheit (3) eine Sensoreinheit ist, mit welcher die angesaugten Luftproben (5) auf alle thermischen Zersetzungsprodukte der angesaugten Luft, mindestens jedoch auf eine der Brandkenngrößen Rauch, CO-Brandgase, brennbare Gase und Wärme analysierbar sind.

5. Rotorvorrichtung nach Anspruch 4, **dadurch gekennzeichnet, daß** die Meldeeinheit (3) über eine in der Rotorvorrichtung vorhandene rotierende Nabenwelle mittels Schleifringen mit Strom versorgbar ist.

6. Rotorvorrichtung nach einem der o.g. Ansprüche, **dadurch gekennzeichnet, daß** die Meldeeinheit (3) über einen Generator, der sich auf einer in der Rotorvorrichtung vorhandenen Nabenwelle befindet, mit Strom versorgt wird.

7. Rotorvorrichtung nach Anspruch 5, **dadurch gekennzeichnet, daß** die Schaltzustände der Sensoren der Meldeeinheit (3) über die Schleifringe oder per Funk an die Auswerteeinheit einer Brandmeldezentrale übertragbar sind.

8. Rotorvorrichtung nach einem der o.g. Ansprüche, **dadurch gekennzeichnet, daß** die Ansaugrohre (2) innerhalb und/oder außerhalb der Rotorblätter (1) angeordnet sind und sich über einen Großteil der Rotorblattfläche erstrecken.

9. Rotorvorrichtung nach einem der o.g. Ansprüche, **dadurch gekennzeichnet, daß** die Ansaugrohre (2) in die Rotorblätter (1) eingearbeitete Kanäle sind.

10. Rotorvorrichtung nach einem der o.g. Ansprüche, **dadurch gekennzeichnet, daß** die Ansaugrohre (2) mindestens eine Ansaugöffnung (21) aufweisen.

11. Rotorvorrichtung nach einem der o.g. Ansprüche, **dadurch gekennzeichnet, daß** die Ansaugrohre (2) eine Ansaugrohrrückführung (22) aufweisen.

12. Windkraftanlage bestehend aus einem Turm und einer an der Spitze des Turmes angeordneten Gondel mit mechanischen/elektrischen Einrichtungen zur Stromerzeugung und einem Rotor mit mindestens einem Rotorblatt, das sich um die Rotor-Längsachse dreht, **dadurch gekennzeichnet, daß** die Windkraftanlage eine Rotorvorrichtung, die nach einem der Ansprüche 1 bis 11 ausgebildet ist, umfasst.

## Claims

1. A rotor device of a wind turbine, comprising a detection and evaluation unit (3) for fire, smoke and function monitoring of the rotor blades (1) of the wind turbine, **characterized in that** the rotor device comprises at least one rotor blade (1), which is equipped with at least one intake pipe (2), which conveys the aspirated air to the detection and evaluation unit (3) disposed in the rotor device.

2. The rotor device according to claim 1, **characterized in that** several rotor blades (1) are equipped with intake pipes (2), a switch valve for selectively sampling air samples (5) being disposed between the intake pipes (2) of the individual rotor blades (1) and the detection unit (3).

3. The rotor device according to claims 1 and 2, **characterized in that** the detection unit (3) is disposed in the rotating part (1) of a rotor hub (4) present in the rotor device.

4. The rotor device according to one of the afore-mentioned claims, **characterized in that** the detection unit (3) is a sensor unit, by means of which the aspirated air samples (5) can be analyzed in terms of all thermal decomposition products of the aspirated air, at least however in terms of one of the following fire parameters: smoke, CO-fumes, flammable gases and heat.

5. The rotor device according to claim 4, **characterized in that** the detection unit (3) can be supplied with electricity by means of slip rings via a rotating hub shaft present in the rotor device.

6. The rotor device according to one of the afore-mentioned claims, **characterized in that** the detection unit (3) is supplied with electricity via a generator, which is located on a hub shaft present in the rotor device.

7. The rotor device according to claim 5, **characterized in that** the switching statuses of the sensors of the detection unit (3) can be transmitted via the slip rings or by radio to the evaluation unit of a central fire alarm system.

8. The rotor device according to one of the afore-mentioned claims, **characterized in that** the intake pipes (2) are disposed inside and/or outside of the rotor blades (1) and extend along a big part of the rotor blade surface.

9. The rotor device according to one of the afore-mentioned claims, **characterized in that** the intake pipes (2) are channels which are incorporated in the rotor blades (1).

10. The rotor device according to one of the afore-mentioned claims, **characterized in that** the intake pipes (2) have at least one intake aperture (21).

11. The rotor device according to one of the afore-mentioned claims, **characterized in that** the intake pipes (2) have a return intake pipe (22).

12. A wind turbine consisting of a tower and a nacelle disposed at the top of the tower with mechanical/electrical devices for electricity generation and a rotor with at least one rotor blade, which rotates around the longitudinal axis of the rotor, **characterized in that** the wind turbine comprises a rotor device configured according to one of the claims 1 to 11.

## Revendications

1. Dispositif de rotor d'une centrale éolienne, comprenant une unité de détection et d'évaluation (3) pour la surveillance d'incendie, de fumée et de fonctionnement des pales de rotor (1) de la centrale éolienne, **caractérisé en ce que** le dispositif de rotor comprend au moins une pale de rotor (1) équipée d'au moins un tuyau d'aspiration (2) qui amène l'air aspiré à l'unité de détection et d'évaluation (3) disposée dans le dispositif de rotor.

2. Dispositif de rotor selon la revendication 1, **caractérisé en ce que** plusieurs pales de rotor (1) sont équipées de tubes d'aspiration (2), une vanne de commutation pour le prélèvement sélectif d'échantillons d'air (5) étant disposée entre les tuyaux d'aspiration (2) de chacune des pales de rotor (1) et l'unité de détection (3).

3. Dispositif de rotor selon les revendications 1 ou 2, **caractérisé en ce que** l'unité de détection (3) est disposée dans la partie rotative d'un moyeu de rotor (4) présent dans le dispositif de rotor.

4. Dispositif de rotor selon l'une quelconque des revendications précédentes, **caractérisé en ce que** l'unité de détection (3) est une unité de capteur au moyen de laquelle les échantillons d'air (5) aspirés peuvent être analysés en termes de tous les produits de décomposition thermique de l'air aspiré, ou du moins en termes des indicateurs d'incendie suivants : fumée, fumées d'incendie CO, gaz inflammables et chaleur.

5. Dispositif de rotor selon la revendication 4, **caractérisé en ce que** l'unité de détection (3) peut être alimentée en électricité via un arbre de moyeu rotatif présent dans le dispositif de rotor au moyen de bagues de frottement.

6. Dispositif de rotor selon l'une quelconque des revendications précédentes, **caractérisé en ce que** l'unité de détection (3) est alimentée en électricité via un générateur situé sur un arbre de moyeu présent dans le dispositif de rotor.

7. Dispositif de rotor selon la revendication 5, **caractérisé en ce que** les états de commutation des capteurs de l'unité de détection (3) peuvent être transmis à l'unité d'évaluation d'une centrale de détection d'incendie via les bagues de frottement ou par radio.

8. Dispositif de rotor selon l'une quelconque des revendications précédentes, **caractérisé en ce que** les tuyaux d'aspiration (2) sont disposés à l'intérieur et/ou à l'extérieur des pales de rotor (1) et s'étendent sur une grande partie de la surface des pales de rotor.

9. Dispositif de rotor selon l'une quelconque des revendications précédentes, **caractérisé en ce que** les tuyaux d'aspiration (2) sont des canaux incorporés dans les pales de rotor (1).

10. Dispositif de rotor selon l'une quelconque des revendications précédentes, **caractérisé en ce que** les tuyaux d'aspiration (2) comportent au moins une ouverture d'aspiration (21).

11. Dispositif de rotor selon l'une quelconque des revendications précédentes, **caractérisé en ce que** les tuyaux d'aspiration (2) comportent un retour (22) du tuyau d'aspiration.

12. Centrale éolienne composée d'une tour et d'une nacelle disposée au sommet de la tour, avec des dispositifs mécaniques/électriques pour la production d'électricité et d'un rotor avec au moins une pale de rotor en rotation autour de l'axe longitudinal du rotor, **caractérisée en ce que** la centrale éolienne comprend un dispositif de rotor configuré selon l'une des revendications 1 à 11.
